# EUROPÄISCHE PATENTANMELDUNG

(11) **EP 2 253 256 A2**
(43) Veröffentlichungstag der Anmeldung: **24.11.2010**
(21) Anmeldenummer: 10156057.1
(22) Anmeldetag: 10.03.2010
(51) Int. Cl.: A47J 43/07

(54) **Küchenmaschine mit einem Rührgefäß**

(30) Priorität: 26.03.2009 DE 102009014990
(71) Anmelder: Vorwerk & Co. Interholding GmbH, 42275 Wuppertal (DE)
(72) Erfinder: Arnold, Hans-Peter, 58566, Kierspe (DE); Brech, Oliver, 44532, Lünen (DE); Degen-Braun, Barbara, 42327, Wuppertal (DE)
(74) Vertreter: Müller, Enno

(57) **Zusammenfassung**

Die Erfindung betrifft eine Küchenmaschine (1) mit einem Rührgefäß (4) und einem Gehäuse mit einer Rührgefäßaufnahme (2), wobei in dem Gehäuse ein Antrieb für ein in dem Rührgefäß (4) befindliches Rührwerk (6) vorgesehen ist, wobei weiter der Boden (5) des Rührgefäßes (4) bevorzugt aufheizbar ist und das Rührwerk (6) in dem Rührgefäß (4) verriegelbar ist. Um eine Küchenmaschine der in Rede stehenden Art hinsichtlich der Verriegelung des Rührwerks im Rührtopf funktionssicherer und handhabungstechnisch günstiger auszugestalten, wird bei einer Küchenmaschine, bei welcher weiter ein Verriegelungselement (15) zur Rührwerks-Verriegelung aus einem horizontal verlagerbaren, auffederbaren Verriegelungsbügel (26) besteht vorgeschlagen, dass der Verriegelungsbügel (26) in eine selbsttätig nicht aufhebbare Öffnungsposition verlagerbar ist. Bei einer Küchenmaschine, bei welcher die Rührwerk-Verriegelung von außen mittels eines Betätigungselementes betätigbar ist, ist vorgesehen, dass das Betätigungselement in eine stabile Öffnungsstellung zu verlagern ist, in welcher das Betätigungselement zugleich die Inbetriebnahme der Küchenmaschine (1) hindert.

## Beschreibung

Die Erfindung betrifft zunächst eine Küchenmaschine mit einem Rührgefäß und einem Gehäuse mit einer Rührgefäßaufnahme, wobei in dem Gehäuse ein Antrieb für ein in dem Rührgefäß befindliches Rührwerk vorgesehen ist, wobei weiter der Boden des Rührgefäßes bevorzugt aufheizbar ist und das Rührwerk in dem Rührgefäß verriegelbar ist, wobei weiter ein Verriegelungselement zur Rührwerks-Verriegelung aus einem horizontal verlagerbaren, auffederbaren Verriegelungsbügel besteht.

Weiter betrifft die Erfindung eine Küchenmaschine mit einem Rührgefäß und einem Gehäuse mit einer Rührgefäßaufnahme, wobei in dem Gehäuse ein Antrieb für ein in dem Rührgefäß befindliches Rührwerk vorgesehen ist, wobei weiter der Boden des Rührgefäßes bevorzugt aufheizbar ist und das Rührwerk in dem Rührgefäß verriegelbar ist, wobei die Rührwerk-Verriegelung von außen mittels eines Betätigungselementes betätigbar ist.

Die Küchenmaschinen der in Rede stehenden Art sind bekannt. Diese sind insbesondere für den Haushaltsbereich ausgelegt und dienen der Zubereitung von Speisen und/oder der weiteren Verarbeitung von Lebensmitteln, wie beispielsweise Zerkleinern, Verrühren, dies gegebenenfalls unter Wärmeeinwirkung über die rührgefäßbodenseitige Heizung. Eine derartige Küchenmaschine ist beispielsweise aus der DE 102 10 442 A1 bekannt. Das Gehäuse der Küchenmaschine formt eine Aufnahme aus, zur Anordnung des Rührgefäßes, welches Rührgefäß bodenseitig ein antreibbares Rührwerk, beispielsweise in Form eines Messerwerkes aufweist. Das Rührwerk ist bei Anordnung des Rührtopfes in der Aufnahme gekuppelt mit einer Abtriebswelle eines in dem Gehäuse vorgesehenen elektromotorischen Antriebs.

Es besteht das Bedürfnis zu Reinigungszwecken und/oder zum Zwecke des Austausches das Rührwerk vom Rührtopf zu lösen, weiter beispielsweise um den so rührwerklosen Rührtopf einer Spülmaschinenreinigung zuzuführen. In diesem Zusammenhang ist eine Bajonettbefestigung des Rührwerkes am Rührtopfboden bekannt. Eine derartige Befestigung erfordert eine gerichtete Montagelage. Weiter ist beispielsweise aus der DE 699 16 084 T2 eine Rührwerk-Verriegelung bekannt mit einem horizontal verlagerbaren, auffederbaren Verriegelungsbügel, der mit dem Rührwerk zusammenwirkt. Die Horizontalverlagerung des Verriegelungselementes wird erreicht durch Betätigen eines Betätigungselementes von außen. Entsprechend wird durch Drücken des von außen zugänglichen Betätigungselementes das Verriegelungselement in eine, das Rührwerk freigebende Stellung verlagert, wonach das Rührwerk aus der bodenseitigen Öffnung des Rührtopfes entnommen werden kann.

Im Hinblick auf den zuvor beschriebenen Stand der Technik wird eine technische Problematik der Erfindung darin gesehen, eine Küchenmaschine der in Rede stehenden Art hinsichtlich der Verriegelung des Rührwerks im Rührtopf funktionssicherer und handhabungstechnisch günstiger auszugestalten.

Diese Problematik ist zunächst und im Wesentlichen durch den Gegenstand des Anspruches 1 gelöst, wobei darauf abgestellt ist, dass der Verriegelungsbügel in eine selbsttätig nicht aufhebbare Öffnungsposition verlagerbar ist. Zufolge dieser Ausgestaltung ist eine insbesondere handhabungstechnisch günstige Rührwerks-Verriegelung gegeben. Der horizontal verlagerbare, auffederbare Verlagerungsbügel verbleibt nach einer Verlagerung in die Entriegelungsstellung bzw. Öffnungsposition in derselben, so dass nach einer erfolgten Rührwerkentnahme aus dem Rührtopf die bodenseitige Rührwerksaufnahmeöffnung zum Wiedereinsetzen des Rührwerkes unbeeinflusst vom Verriegelungselement frei liegt. Es bedarf entsprechend nicht zwingend der aktiven Verlagerung des Verriegelungselementes zur Ermöglichung des Einsetzens des Rührwerkes in den Rührtopf. In bevorzugter Ausgestaltung wird diese Selbsthaltung des Verriegelungselementes erst durch Benutzereingriff wieder aufgehoben, weiter bevorzugt nach einem Wiedereinsetzen des Rührwerkes in den Rührtopfboden, zur erneuten Verriegelung desselben.

Die geschilderte Problematik ist weiter durch den Gegenstand des Anspruches 2 gelöst, wobei darauf abgestellt ist, dass das Betätigungselement in eine stabile Öffnungsstellung zu verlagern ist, in welcher das Betätigungselement zugleich die Inbetriebnahme der Küchenmaschine hindert. Zufolge dieser Lösung ist eine funktionssichere Ausgestaltung gegeben. Das auf die Rührwerk-Verriegelung einwirkende, von außen für den Benutzer zugängliche Betätigungselement verharrt bevorzugt selbsttätig in der Öffnungsstellung, welche zugleich der Rührwerk-Freigabestellung entspricht. In dieser Öffnungsstellung des Betätigungselementes ist die Inbetriebnahme der Küchenmaschine, insbesondere die Inbetriebnahme des das Rührwerk antreibenden Elektromotors gehindert, so dass ein Betrieb des Rührtopfes ohne oder ohne ordnungsgemäß verriegeltem Rührwerk unterbunden ist. Hierzu wird beispielsweise die Lage des Betätigungselementes detektiert, beispielsweise über einen Mikro- oder Näherungsschalter, weiter beispielsweise über mechanische Mittel.

Die Merkmale der vorbeschriebenen unabhängigen Ansprüche 1 und 2 sind sowohl jeweils für sich wesentlich, als auch in jeder Kombination miteinander, wobei weiter Merkmale eines unabhängigen Anspruches 1 oder 2 mit den Merkmalen eines weiteren unabhängigen Anspruches oder mit Merkmalen mehrerer unabhängiger Ansprüche kombinierbar sind, weiter auch mit nur einzelnen Merkmalen eines oder mehrerer der weiteren unabhängigen Ansprüche 1 bis 2.

So erweist sich weiter eine Kombination von Vorteil, bei welcher das Betätigungselement in eine stabile Öffnungsstellung zu verlagern ist, über welches Betätigungselement der Verriegelungsbügel der Rührwerks-Verriegelung entsprechend in eine selbsttätig nicht aufhebbare Öffnungsposition verlagert ist und wobei weiter das Betätigungselement in der stabilen Öffnungsstellung zugleich die Inbetriebnahme der Küchenmaschine hindert.

Weitere Merkmale der Erfindung sind nachstehend, auch in der Figurenbeschreibung, oftmals in ihrer bevorzugten Zuordnung zum Gegenstand des Anspruches 1 und/oder des Anspruches 2 oder zu Merkmalen weiterer Ansprüche erläutert. Sie können aber auch in einer Zuordnung zu nur einzelnen Merkmalen des Anspruches 1 und/oder des Anspruches 2 oder des jeweiligen weiteren Anspruches oder jeweils unabhängig von Bedeutung sein.

So ist in einer bevorzugten Ausgestaltung vorgesehen, dass das Rührgefäß zumindest bodenseitig in einem Aufnahmeteil aufgenommen ist und dass das Aufnahmeteil in Zusammenwirkung mit dem Rührgefäß eine Aufnahmeöffnung bildet, in welcher das Verriegelungselement aufgenommen und verlagerbar ist. Das Rührgefäß ist in bevorzugter Ausgestaltung ein Metallgefäß. Dieses ist weiter bevorzugt unlösbar mit dem untertopfartig ausgestalteten Aufnahmeteil verbunden, welches gleichfalls als Metallteil ausgebildet sein kann, jedoch bevorzugt gebildet ist als Kunststoffspritzteil. Das Aufnahmeteil umgreift bevorzugt den, dem Rührtopfboden zugewandten Abschnitt der Rührgefäßwandung derart, dass sich der das Rührwerk aufnehmende und aus dem Rührgefäßboden ausgebildete Rührtopfboden innerhalb einer Axialerstreckung des Aufnahmeteiles erstreckt. Abschnitte des Aufnahmeteiles bilden in Zusammenwirkung mit dem Rührgefäß, insbesondere mit dem Rührgefäßboden die Aufnahme und weiter bevorzugt die Führung für das Verriegelungselement. So ist in diesem Zusammenhang weiter vorgesehen, dass zur Aufnahme des Verriegelungselementes an dem Aufnahmeteil ein Bodenabschnitt ausgebildet ist, der sich parallel gerichtet zu einem Bodenabschnitt des Rührgefäßes erstreckt. Es ist demzufolge ein zwischen den Bodenabschnitten verbleibender Spaltraum belassen, in welchem das Verriegelungselement aufgenommen und schiebeverlagerbar ist. Entsprechend ist das Verriegelungselement unter entsprechender Ausgestaltung der Bodenabschnitte, insbesondere des aufnahmeteilseitigen Bodenabschnitts zumindest annähernd in einer Verstecktlage gehalten und somit vor etwaigen Verschmutzungen geschützt, was eine ausreichende Funktionssicherheit bietet. Entsprechend der vorbeschriebenen Ausgestaltung erfolgt die Verriegelung des Rührwerks unterhalb des Rührgefäßbodens.

In weiter bevorzugter Ausgestaltung weist der Aufnahmeteilboden eine Durchgriffsöffnung für einen Kupplungsfortsatz des Rührwerks und gegebenenfalls für Kontaktelemente, die in dem Rührgefäßboden verankert sind, auf. Die Durchgriffsöffnung ist mit Bezug auf den ermöglichten Durchsatz des Kupplungsfortsatzes des Rührwerks axial versetzt zur Rührwerks-Aufnahmeöffnung des Rührgefäßbodens und mit einer Öffnungsweite versehen, die den Durchsatz des Kupplungsfortsatzes und/oder den kuppelnden Eingriff des Kupplungsfortsatzes mit der geräteseitigen Abtriebswelle erlaubt. Auch etwaig vorgesehene Kontaktelemente unterseitig des Rührgefäßbodens, insbesondere zur elektrischen Kontaktierung einer im Gefäßboden ausgebildeten Heizung, beispielsweise Widerstandsheizung, weiter Kontakte zur Regelung und Steuerung der Heizung, durchsetzen gleichfalls die aufnahmeteilbodenseitige Durchgriffsöffnung. Das bügelförmige Verriegelungselement ist in seinen Grundrissabmaßen so angepasst, dass der Durchsatz von Kupplungsfortsatz und Kontaktelementen erlaubt ist.

Das Verriegelungsteil tritt in bevorzugter Ausgestaltung nur im Hinblick auf eine Bewegungshinderung des Rührwerks nach oben, d. h. in Richtung auf das Rührtopfinnere, in Wirkung. Entsprechend wird das Rührwerk insbesondere im Rührbetrieb an einer insbesondere axialen Bewegung in Richtung auf das Rührtopfinnere bevorzugt allein durch das Verriegelungsteil gehindert. Die Bewegungshinderung nach unten ist ein einfachster Weise erreicht durch Abstützung des Rührwerks bzw. eines feststehenden Rührwerkabschnittes auf dem Topfboden, so dass zufolge der vorgeschlagenen Verriegelung das Rührwerk eingespannt ist zwischen Topfbodenoberseite und dem topfbodenunterseitig wirkenden Verriegelungsbügel, wobei zufolge der vorgeschlagenen Verriegelung eine ungerichtete Montagelage des Rührwerks beim Einsetzen in den Topfboden handhabungstechnische Vorteile bietet. Die Abstützung des Rührwerks im Rührgefäß ist bevorzugt auf einem größeren Durchmesser gegeben als der Eingriff des Verriegelungsteils an dem Rührwerk, wobei die Abstützung des Rührwerks oberhalb des Eingriffs des Verriegelungsteils gegeben ist. So ist in weiter bevorzugter Ausgestaltung der Eingriff des Verriegelungsteiles an dem Rührwerk im Bereich eines Durchmessers gegeben, der etwa dem 0,25- bis 0,75-Fachen des Abstützungs-Durchmessers entspricht.

Weiter ist vorgesehen, dass zwischen dem Verriegelungseingriff und der Wandungsinnenfläche des Aufnahmeteils verlaufende Abschnitte des Verriegelungselements durch den Boden des Aufnahmeteils verdeckt sind. Entsprechend ist in weiter bevorzugter Ausgestaltung lediglich der Verriegelungseingriffsbereich des Verriegelungselements durch die Durchgriffsöffnung des Aufnahmeteilbodens frei gelegt, während die im Wesentlichen der Führung des Verriegelungselementes dienenden Abschnitte desselben in einer Verstecktlage angeordnet sind.

Das auf das Verriegelungselement einwirkende Betätigungselement liegt außen zur Betätigung durch den Benutzer frei, wobei weiter in diesem Zusammenhang bevorzugt ist, dass das Verriegelungselement außerhalb der Wandung des Aufnahmeteils mit einem an dem Aufnahmeteil gelagerten Hebel zur Rührwerks-Verriegelung zusammenwirkt. Dieser Hebel ist handbetätigbar, zur Verlagerung des Verriegelungselementes in die Öffnungsstellung und zurück in die Verriegelungsstellung, wobei weiter bevorzugt der Hebel um eine quer zur Rührwerksachse ausgerichtete Achse verschwenkbar ist.

Im Verriegelungszustand liegt der Hebel an die Kontur der Küchenmaschine angepasst an, weiter bevorzugt anliegend an einem Topfgriff des Rührgefäßes, so dass dieser nicht störend die übliche Handhabung des Rührgefäßes insbesondere hinsichtlich des Einsetzens in die Geräteaufnahme bzw. bezüglich des Herausnehmens aus der Aufnahme beeinflusst. In weiter bevorzugter Ausgestaltung liegt der Hebel im Verriegelungszustand an einer Unterseite des Topfgriffes an und somit außerhalb des bevorzugten Greifbereiches.

Im Öffnungszustand des Hebels und somit nach entsprechender Verlagerung des Verriegelungselementes in die Öffnungsstellung befindet sich der Hebel gegenüber dem Topfgriff in einer Spreizstellung, insbesondere in einer nach unten abgespreizten Stellung, die bevorzugt so ausgelegt ist, dass der Hebel in geöffneter Stellung bei einem versuchten Einsetzen des ohne Rührwerk bzw. ohne ordnungsgemäß verriegelten Rührwerk versehenen Rührgefäßes in die Gefäßaufnahme mit dem Gerätegehäuse kollidiert, womit ein Betrieb der Küchenmaschine, insbesondere ein Betrieb des Rührgefäßes ausgeschlossen ist, dies insbesondere bei einer Ausgestaltung des Verriegelungselementes, die eine Rückverlagerung desselben in die Verschlussstellung nur bei eingesetztem Rührwerk erlaubt. Weiter ist zufolge dieser Ausgestaltung die Stellbewegung des Hebels gleichgerichtet zur Fügebewegung des Rührtopfes, so dass bei einer möglichen Fehlanwendung (eingesetztes, jedoch nicht verriegeltes Rührwerk) eine Verschlussbewegung des Verriegelungselementes über den sich an der Kontur der Küchenmaschine abstützenden Hebel erzwungen wird.

Der Hebel weist in weiter bevorzugter Ausgestaltung einen abgeknickten Verlauf auf, wobei die Zusammenwirkung mit dem Verriegelungselement im Knickbereich gegeben ist. So ist eine Schwenkbewegung des Hebels in eine translatorische Bewegung des Verriegelungselementes ermöglicht. Der Knickbereich des Hebels ist hierbei beabstandet zum Anlenkungsbereich desselben, wozu in einer weiter bevorzugten Ausgestaltung ein Anlenkschenkel des Hebels an dem Aufnahmeteil angelenkt ist, welcher Anlenkschenkel im Wesentlich quergerichtet ist zur Längserstreckung des Betätigungsabschnittes des Hebels. In diesem Zusammenhang sind weiter bevorzugt zwei Anlenkschenkel vorgesehen, die in Richtung der Hebel-Schwenkachse betrachtet zueinander beabstandet sind und U-förmig miteinander verbunden sind, dies weiter bevorzugt mit einem Abstand zueinander, der angepasst ist an die in derselben Richtung betrachtete Stärke des Rührtopfgriffes. Die Anlenkung ist hierbei bevorzugt erreicht in einem Übergangsbereich vom Aufnahmeteil in den bevorzugt an diesem angeformten Gefäßgriff.

Der Betätigungsabschnitt des Hebels wurzelt in dem U-Steg, der zur Zusammenwirkung mit dem Verriegelungselement den Knickbereich des insgesamt einen abgeknickten Verlauf aufweisenden Hebels ausformt.

Eine insbesondere konstruktiv günstige Lösung ist erreicht, indem das Verriegelungselement als sich in einer Horizontalen erstreckendes Metallteil ausgebildet ist, wobei integrale Bestandteile des Verriegelungselements den Verriegelungseingriff bilden. Es kann sich hierbei um ein Stanzteil oder auch Biegeteil handeln, weiter bevorzugt um ein Drahtbiegeteil, aus welchem integral der Verriegelungseingriff geformt ist. Hierbei ist weiter bevorzugt, dass bei Ausgestaltung des Verriegelungselements als Verriegelungsbügel der Verriegelungsbügel in Verriegelungsrichtung gesehen drei unterschiedliche Bereiche aufweist, nämlich einen Schiebe- und Betätigungsbereich, einen Eingriffsbereich und einen Gegenlagerbereich. Hierbei steht der Schiebe- und Betätigungsbereich in Eingriff mit dem außenseitig zugänglichen Betätigungselement, beispielsweise dem Hebel. Zugleich ist hierüber eine Führung des Verriegelungsbügels insbesondere in einem Zwischenraum zwischen den parallel ausgerichteten Böden des Rührtopfes und des Aufnahmeteils gegeben, welcher Schiebe- und Betätigungsbereich darüber hinaus in dem sich aufnahmeteilinnenseitig erstreckenden Abschnitt von dem Aufnahmeteilboden überdeckt ist. Der sich hieran anschließende Eingriffsbereich ist zur Verriegelung des Rührwerks ausgebildet zur Bewegungshinderung des Rührwerks nach oben. Endseitig, d. h. dem Schiebe- und Betätigungsbereich gegenüberliegend ist ein Gegenlagerbereich ausgeformt, der bevorzugt wie auch der Schiebe- und Betätigungsbereich in dem Aufnahmeteil bzw. zwischen Aufnahmeteil und Rührgefäßboden geführt ist und somit den gesamten Verriegelungsbügel unabhängig von dessen Stellung lagerichtig, d. h. bevorzugt horizontal bzw. senkrecht zur Rührwerksachse hält.

Hierbei ist weiter bevorzugt der Schiebe- und Betätigungsbereich quer zur Verschieberichtung mit einer etwa zweifachen größeren Abmessung ausgebildet als der Eingriffs- und/oder Gegenlagerbereich, weiter beispielsweise mit einer 1,5- bis 3-Fach größeren Abmessung. In weiterer Ausgestaltung sind der Eingriffs- und Gegenlagerbereich im Wesentlichen mit einer quer zur Verschieberichtung betrachteten gleichen Abmessung versehen. In Verschieberichtung betrachtet entspricht die Länge des kombinierten Eingriffs- und Gegenlagerbereichs etwa dem 0,3- bis 0,9- Fachen der in selber Richtung betrachteten Länge des Schiebe- und Betätigungsbereiches, wobei weiter die quer hierzu betrachtete Abmessung des Eingriff- bzw. des Gegenlagerbereiches etwa dem Verlagerungsmaß des gesamten Verriegelungsbügels entspricht.

Im Zuge des Verlagerns in die Öffnungsstellung spreizt der Verriegelungsbügel durch Entlanglaufen an der Kontur des Rührwerks bzw. durch Entlanglaufen an der Kontur eines feststehenden bzw. nicht drehangetriebenen Abschnitts des Rührwerks auf, dies durch die auffederbare Ausgestaltung des Verriegelungsbügels, beispielsweise durch Ausformung desselben aus einem Drahtbügel. Insbesondere der Eingriffsbereich ist elastisch rückstellfähig ausgestaltet. Der Verriegelungsbügel ist weiter so gebildet, dass dieser eine Verrastung durch Auffederung von zwei gegenüberliegenden, das Rührwerklager teilweise umschlingenden Schenkel ermöglicht, die eine Bewegung rechtwinklig zur Rührwerkachse durchführen, wobei die Vorspannung durch eine Überhöhung an der Rastkontur des Bügelschenkels erzeugt wird, die sich beim Verschieben des Verriegelungsbügels elastisch deformiert. Hierbei ist weiter vorgesehen, dass der Verriegelungsbügel in eine korrespondierende Nut am Lagergehäuse des Rührwerks vorgespannt und verrastend eingreift.

Der Verriegelungsbügel ist in dem von außen zugänglichen Hebel formschlussgehaltert, weiter bevorzugt in der Art, dass der Verriegelungsbügel in dem Betätigungsabschnitt des Hebels in einer nach unten offenen Nut einliegt, was sich insbesondere montagetechnisch von Vorteil erweist.

Zufolge der vorbeschriebenen Ausgestaltung ist eine handhabungstechnisch günstige und drüber hinaus funktionssichere Lösung zur Rührwerks-Festlegung angegeben. Sowohl das das Rührwerk verriegelnde Verriegelungselement als auch das auf das Verriegelungselement zur Verlagerung desselben einwirkende Betätigungselement sind unverlierbar an dem Rührgefäß angeordnet.

Bei einer weiter alternativen Ausgestaltung, bei welcher das Rührgefäß mit dem untertopfartigen Aufnahmeteil lösbar verbunden ist, erweist es sich weiter von Vorteil, wenn durch Verlagerung der Rührwerk-Verriegelung in die Verriegelungsstellung zugleich das Aufnahmeteil an dem Rührgefäß verriegelt ist, dies entsprechend einhergehend mit einer Verriegelung des Rührwerks am Rührgefäßboden.

Die jeweils angegebenen zahlenmäßigen Bandbreiten schließen auch - soweit solche nicht ohnehin exemplarisch angegeben sind - sämtliche Zwischenwerte ein und zwar insbesondere in 1/10-Schritten von der unteren und/oder oberen Grenze auf die jeweils andere Grenze hin eingeschränkt. "Und" steht hierbei dafür, dass beide Grenzen um jeweils ein oder mehrere Zehntel auf die Grenze hin verschoben, d. h. eingegrenzt werden.

Nachstehend ist die Erfindung anhand der beigefügten Zeichnung, welche lediglich ein Ausführungsbeispiel darstellt, näher erläutert. Es zeigt:
- Fig. 1: in perspektivischer Darstellung eine Küchemaschine der in Rede stehenden Art mit einem in einer geräteseitigen Auf- nahme aufgenommenen Rührgefäß;
- Fig. 2: eine partielle Schnittdarstellung gemäß der Schnittebene II in Fig. 1, die Verriegelungsstellung eines in dem Rührtopf aufgenommenen Rührwerks betreffend;
- Fig. 3: eine partiell geschnittene, perspektivische Ausschnittdar- stellung des Rührtopfbodenbereiches, die Verriegelungs- stellung des Rührwerks betreffend;
- Fig. 4: den Schnitt gemäß der Schnittebene IV in Fig. 3;
- Fig. 5: eine der Fig. 2 entsprechende Darstellung, jedoch die Ent- riegelungsstellung des Rührwerks betreffend:
- Fig. 6: eine der Fig. 3 entsprechende Darstellung, die Stellung ge- mäß Fig. 5 betreffend;
- Fig. 7: in einer schematischen Einzeldarstellung ein Verriege- lungselement in Zusammenwirkung mit dem festzulegen- den bzw. freizugebenden Rührwerk in verschiedenen Ver- schiebestellungen.

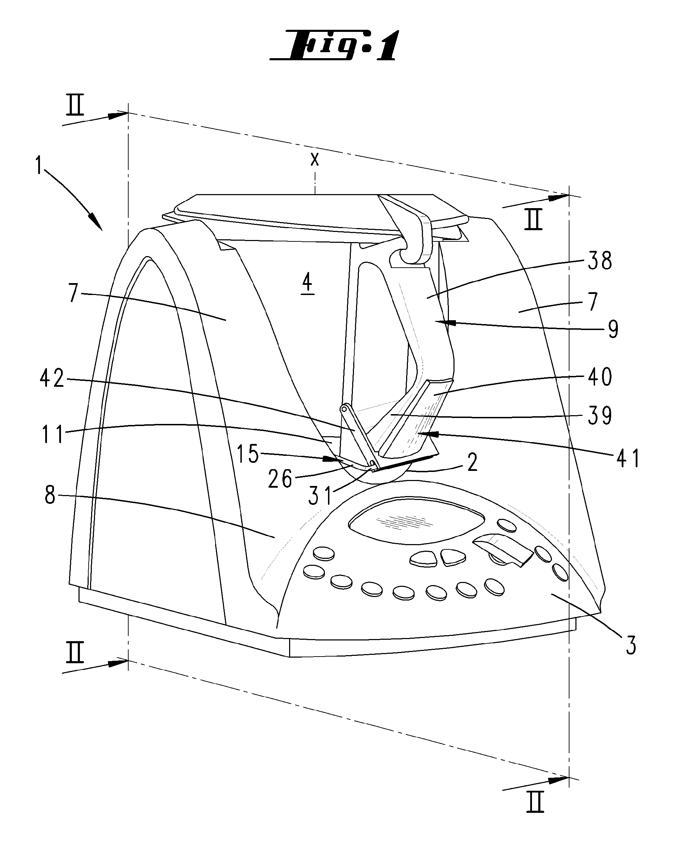

Dargestellt und beschrieben ist zunächst mit Bezug zu Fig. 1 eine Küchemaschine 1 mit einer Rührgefäß-Aufnahme 2 und einem Bedienfeld 3.

Der Küchenmaschine 1 ist ein Rührgefäß 4 zuordbar, indem dieses in die Rührgefäß-Aufnahme 2 eingesetzt wird. In dem Rührgefäß 4 ist dem Rührgefäßboden 5 zugeordnet ein Rührwerk 6 vorgesehen, welches über einen in der Küchenmaschine 1 unterhalb der Aufnahme 2 angeordneten, nicht dargestellten Elektroantrieb betrieben wird.

Die Rührgefäß-Aufnahme 2 ist im Wesentlichen gebildet aus zwei gegenüberliegend angeordneten, turmartigen Backen 7, zwischen welchen Backen 7 zwei gegenüberliegende, jeweils eine Freifläche ausbildende Ausschnitte ausgeformt sind. Im Übergangsbereich von den Backen 7 auf das Bedienfeld 3 ist eine, die beiden Backen 7 verbindende, das Bedienfeld 3 abschirmende Ablaufrinne 8 vorgesehen.

Das in die Rührgefäß-Aufnahme 2 einzusetzende Rührgefäß 4 besitzt einen senkrecht ausgerichteten Haltegriff 9. Der Sockelbereich 10 des Rührgefäßes 4 ist topfartig mit kreisrundem Querschnitt ausgebildet und trägt zentral im Inneren das Rührwerk 6.

Das Rührgefäß 4 wird der Küchenmaschine 1 derart zugeordnet, dass der Haltegriff 9 sich freistehend zwischen den Backen 7, dem Bedienfeld 3 zugewandt, erstreckt.

Das Rührgefäß 4 ist bodenseitig im Sockelbereich 10 aufgenommen in einem aus einem Hartkunststoffmaterial gefertigten Aufnahmeteil 11. Dieses ist gleichfalls topfartiger Gestalt und weist einen mit axialem Abstand zum Aufsetzrand 12 angeformten Aufnahmeteilboden 13 auf, der sich parallel zum Rührgefäßboden 5 und unterhalb desselben erstreckt. Aufnahmeteilboden 13 und Rührgefäßboden 15 sind zueinander in Erstreckungsrichtung der Topf- bzw. Rührwerksachse x beabstandet zur Ausformung eines bei in der Aufnahme 2 eingesetztem Rührgefäß 4 bzw. bei Aufsetzen des Rührgefäßes 4 auf einer ebenen Fläche horizontal ausgerichteten Aufnahmeraums 14 für ein Verriegelungselement 15.

Der sich unterseitig des Aufnahmeteilbodens 13 weiter erstreckende Abschnitt der Aufnahmeteilwandung 16 weist ein in Achsrichtung betrachtetes Erstreckungsmaß auf, welches ein kippsicheres Abstellen des Rührgefäßes 4 auf einer ebenen Fläche, beispielsweise auf einer Arbeitsfläche erlaubt.

Das dem Rührgefäßboden 5 zuordbare Rührwerk 6 weist eine nicht näher dargestellte Abtriebswelle auf, in welcher einerends, dem Rührgefäßinneren zugewandt drehfest ein Messerwerk 17 angeordnet ist. Andernends formt die Abtriebswelle einen Kupplungsfortsatz 18, der in der Zuordnungsstellung zum Rührgefäßboden 5 nach unten über die Ebene des Aufnahmeteilbodens 13 hinausragt, wobei die freie Stirnfläche des Kupplungsfortsatzes 18 mit axialem Abstand vor dem Aufsetzrand 12 des Aufnahmeteils 11 positioniert ist.

Die Abtriebswelle ist in einem Lagergehäuse 19 gehalten, welches im Betrieb des Rührwerks 6 drehfest gehalten ist.

Zum Durchsatz insbesondere des Kupplungsfortsatzes 18 weist der Rührgefäßboden 5 eine zentrale, im Grundriss kreisrunde Öffnung 20 auf. Diese ist gegenüber dem Außendurchmesser des Lagergehäuses 19 durchmesserreduziert.

Zudem ist auch in dem Aufnahmeteilboden 13 eine zentrale Durchgriffsöffnung 21 vorgesehen, zum Durchgriff des Kupplungsfortsatzes 18.

Die drehfeste Mitnahme der rührwerkseitigen Abtriebswelle erfolgt durch Kupplungseingriff der geräteseitigen Antriebswelle im Bereich des Kupplungsfortsatzes 18, dies weiter im Bereich der aufnahmeteilbodenseitigen Durchgriffsöffnung 21 und axial unterhalb derselben.

Die Durchgriffsöffnung 21 erstreckt sich ausgehend vom zentralen Bereich nach radial außen in Richtung auf den mantelwandaußenseitig an dem Aufnahmeteil 11 angeformten Haltegriff 9, wobei die quer zur Erstreckungsrichtung der Durchgriffsöffnung 21 betrachtete Breite derselben dem Durchmesser im zentralen Bereich entspricht. Dieser ist zudem angepasst an den Durchmesser der rührgefäßbodenseitigen Öffnung 20.

Der sich nach radial außen bis zur Innenseite der Aufnahmeteilwandung 16 erstreckende Abschnitt der Durchgriffsöffnung 21 ist durchsetzt von Kontaktelementen 22, die in dem Rührgefäßboden 5 verankert sind. Diese dienen zur elektrischen Kontaktierung und Steuerung einer rührtopfinnenseitig auf dem Rührgefäßboden 5 angeordneten, kreisscheibenförmigen Widerstandsheizung 23.

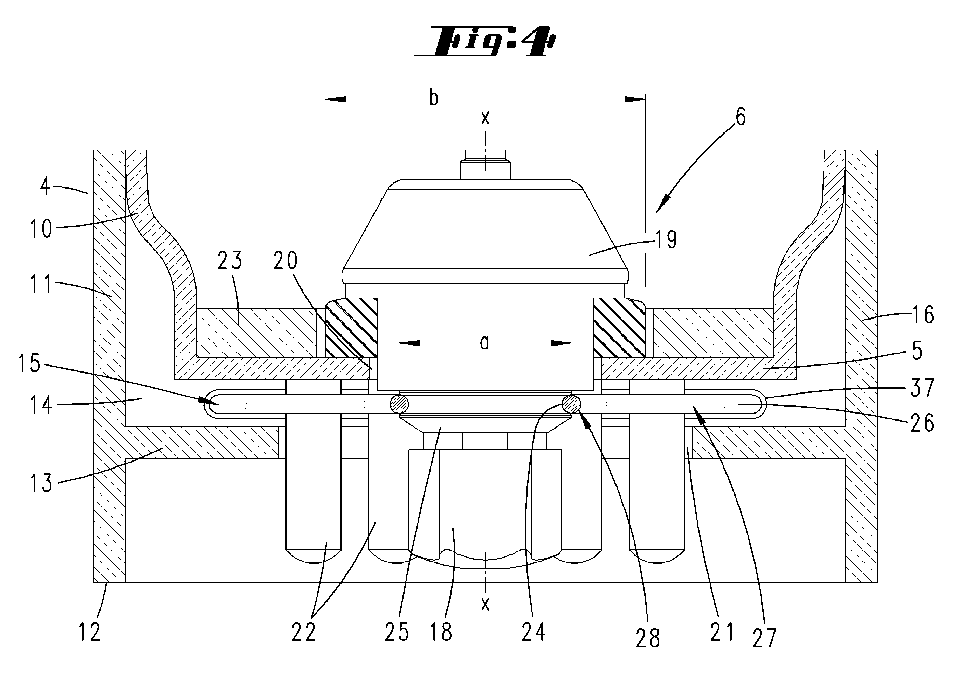

Das insgesamt rotationssymmetrisch aufgebaute Lagergehäuse 19 weist eine im eingesetzten Zustand des Rührwerks 6 in dem Rührgefäßboden 5 sich in der Ebene des Aufnahmeraumes 14 zwischen Aufnahmeteilboden 13 und Rührgefäßboden 5 erstreckende Ringnut 24 auf. Diese ist in einem Lagergehäuseabschnitt 25 ausgebildet, der gegenüber dem sich auf dem Rührgefäßboden abstützenden Abschnitt durchmesserverringert ist. So entspricht in dem dargestellten Ausführungsbeispiel der Durchmesser a im Bereich des die Ringnut 24 aufweisenden Lagergehäuseabschnittes 25 etwa dem 0,5-Fachen des Durchmessers b im Bereich der Abstützung des Rührwerkes 6 auf dem Rührgefäßboden 5 (vgl. Fig. 4).

Unmittelbar unterhalb des die Ringnut 24 aufweisenden Lagergehäuseabschnittes 25 schließt sich der hierzu relativ drehbare Kupplungsfortsatz 18 an.

Die Ringnut 24 dient zur Festlegung des Rührwerks 6 an dem Rührgefäßboden 5 in Zusammenwirkung mit dem Verriegelungselement 15. Dieses ist in der dargestellten Ausführungsform als Verriegelungsbügel 26 gestaltet, weiter gebildet aus einem sich in einer Horizontalen erstreckenden Metallteil mit kreisrundem Querschnitt. So ist dieser Verriegelungsbügel 26 beispielsweise geformt aus einem Metalldraht mit einer Stärke von 2 bis 3 mm, der unter Biegeverformung den umlaufend geschlossenen Bügel bildet.

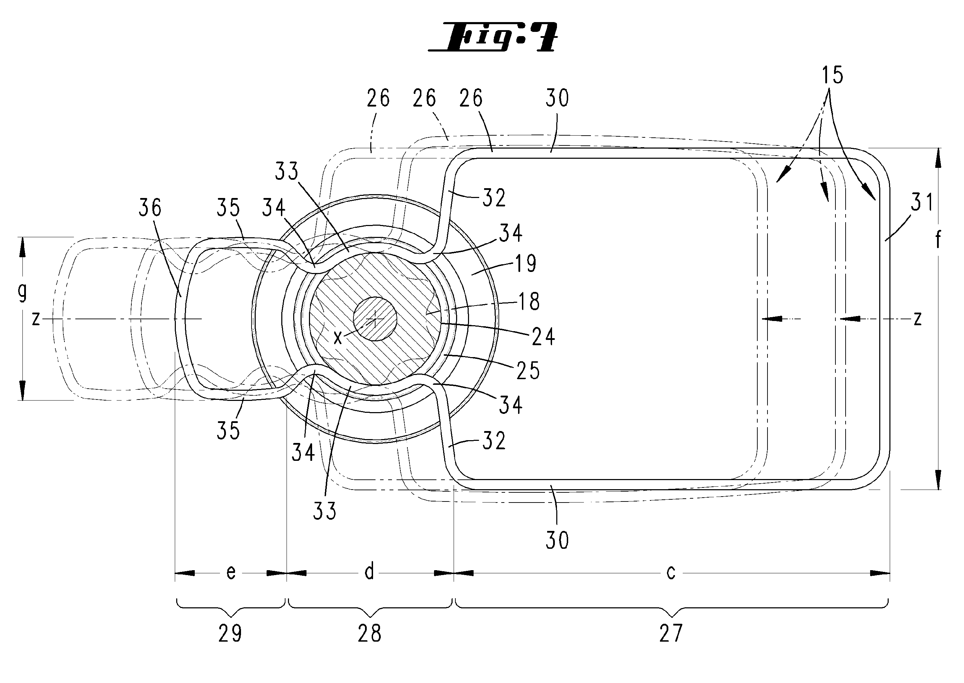

Wie insbesondere aus der Darstellung in Fig. 7 zu erkennen, weist der Verriegelungsbügel 26 drei hintereinander geschaltete, unterschiedliche Bereiche auf, so zunächst einen Schiebe- und Betätigungsbereich 27, dem ein Eingriffbereich 28 folgt. Letzterem schließt sich endlich ein Gegenlagerbereich 29 an.

Der in dem Aufnahmeraum 14 einliegende Verriegelungsbügel 26 ist ausgelegt zur Schiebeverlagerung desselben in Richtung seiner Längserstreckung, weiter in einer Horizontalebene.

Der Verriegelungsbügel 26 ist mit Bezug auf die Grundrissgestaltung gemäß Fig. 7, weiter mit Bezug zu einer Symmetrieachse z klappsymmetrisch gestaltet, welche Symmetrieachse z in Längserstreckung des Verriegelungsbügels 26 verläuft.

Der Schiebe-/Betätigungsbereich 27 weist hierbei eine Länge c auf, die etwa dem 1,5-Fachen der Addition der Längen d und e von Eingriffsbereich 28 und Gegenlagerbereich 29 entspricht, wobei weiter der Eingriffsbereich 28 eine etwa 1,5 -Fache Länge d der Länge e des Gegenlagerbereiches 29 aufweist.

Die quer zur Längserstreckung betrachtete Breite g von Eingriffsbereich 28 und Gegenlagerbereich 29 ist so gewählt, dass diese etwa der 0,5-Fachen Breite f im Schiebe- und Betätigungsbereich 27 entspricht.

Der Schiebe- und Betätigungsbereich 27 besitzt zwei parallel zueinander verlaufende Längsschenkel 30, deren einen, dem Eingriffsbereich 28 abgewandten Enden über einen quer zur Längserstreckung des Verriegelungsbügels 26 verlaufenden Betätigungsschenkel 31 verbunden sind.

Die dem Betätigungsschenkel 31 gegenüberliegenden Enden der Schenkel 30 gehen über in nach innen aufeinander zu weisende und in den Eingriffsbereich 28 übergehende Schenkelabschnitte 32, die zu den zugeordneten Längsschenkeln 30 einen stumpfen Winkel von etwa 100° einschließen.

Der Eingriffsbereich 28 ist gebildet durch mit Bezug zur Symmetrieachse z gegenüberliegende kreisabschnittförmige Rastschenkel 33, wobei die so gestalteten Bogenabschnitte nach außen weisen. Der Innenradius der Rastschenkel 33 ist angepasst an den Radius des Nutgrundes der rührwerkseitigen Ringnut 24 im Lagergehäuseabschnitt 25.

In Längserstreckung des Verriegelungsbügels 26 betrachtet ist jedem Rastschenkel 33 jeweils eine nach innen weisende Überhöhung 34 vor- und nachgeordnet, wobei eine Überhöhung 34 den Übergang zum Schenkelabschnitt 32 des Schiebe- und Betätigungsbereiches 37 bildet, während die andere Überhöhung 34 des Rastschenkels 33 den nachfolgenden Gegenlagerbereich 29 anbindet. Dieser Gegenlagerbereich 29 weist wiederum zwei annähernd parallel zueinander verlaufende Längsschenkel 35, die endseitig, dem Eingriffsbereich 28 abgewandt über einen Querschenkel 36 verbunden sind.

Der so gestaltete Verriegelungsbügel 26 ist in dem Aufnahmeraum 14 derart aufgenommen, dass sowohl die Längsschenkel 30 des Schiebe- und Betätigungsbereiches 27 als auch die Längsschenkel 35 des Gegenlagerbereiches 29, darüber hinaus auch der Querschenkel 36 des Gegenlagerbereiches 29 von dem Aufnahmeteilboden 13 überdeckt sind. Lediglich der Eingriffsbereich 28 liegt, in einer Öffnungsstellung zumindest teilweise frei im Bereich der aufnahmeteilbodenseitigen Durchgriffsöffnung 21.

Die Längsschenkel 30 des Schiebe- und Betätigungsbereiches 27 durchsetzen eine in der Ebene des Aufnahmeraumes 14 in der Aufnahmeteilwandung 16 ausgebildete Schlitzöffnung 37. Der Betätigungsabschnitt 31 des Schiebe- und Betätigungsbereiches 27 verläuft entsprechend außerhalb des Aufnahmeteils 11, zugeordnet einem unteren Anbindungsbereich des Haltegriffes 9 an dem Aufnahmeteil 11.

Der Haltegriff 9 ist mit Bezug auf eine Seitenansicht gewinkelt ausgebildet, mit einem Griff-Oberabschnitt 38 und einem Griff-Unterabschnitt 39, welche etwa in einem 90° Winkel zueinander stehen und jeweils im Wurzelbereich zum Rührgefäß 4 bzw. zum Aufnahmeteil 11 etwa einen Winkel von 45° einschließen.

Unterseitig des Griff-Unterabschnittes 39 erstreckt sich ein Betätigungsabschnitt 40 eines Hebels 41, der in einer Grundstellung, d. h. weiter in einer Rührwerk-Verriegelungsstellung flächig unterseitig an dem Griff-Unterabschnitt 39 anliegt.

Der Hebel 41 weist einen abgeknickten Verlauf auf. So ist der Betätigungsabschnitt 40 beidseitig mit Bezug auf seine Breitenerstreckung mit zwei etwa rechtwinklig zum Betätigungsabschnitt 40 abweisenden Anlenkschenkeln 42 versehen, die den Griff-Unterabschnitt 39 des Haltegriffes 9 flankieren. Diese Anlenkschenkel 42 sind an dem Aufnahmeteil 11 angelenkt unter Bildung einer quer zur Rührgefäß- bzw. Rührwerks-Achse x verlaufenden Schwenkachse y.

Die Anlenkschenkel 42 sind weiter im der Anlenkung gegenüberliegenden Bereich U-förmig miteinander verbunden, wobei der hierbei gebildete U-Steg 43 eine nach unten offene Nut 44 aufweist. In dieser liegt der Betätigungsschenkel 31 des Verriegelungsbügels 26 unverlierbar ein.

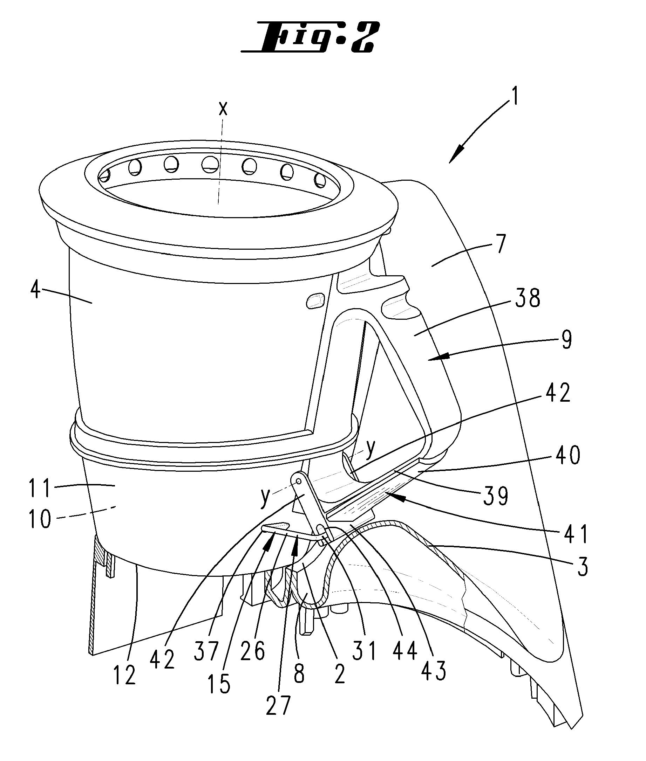

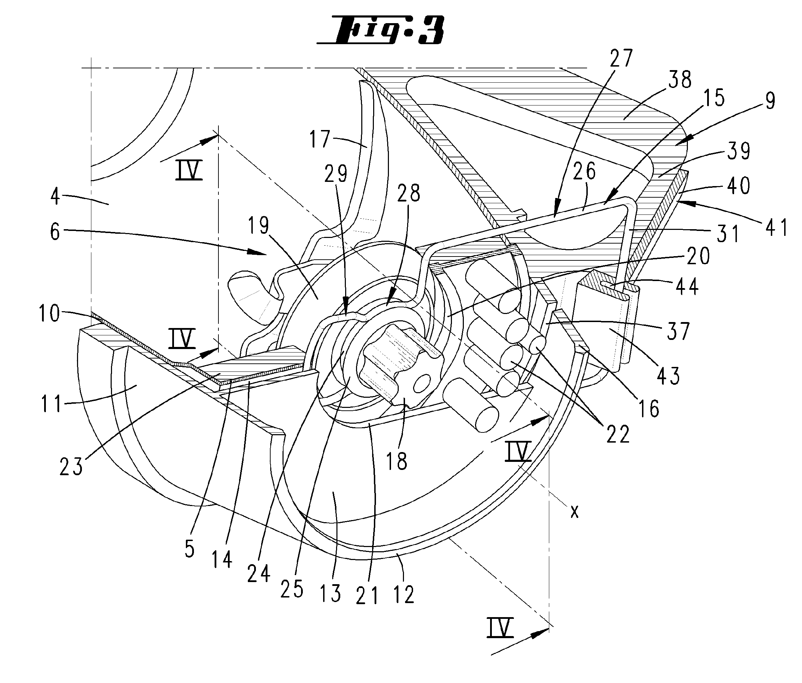

In der in den Fig. 1 bis 4 dargestellten Rührwerk-Verriegelungsstellung liegt der Betätigungsabschnitt 40 des Hebels 41 flächig an der Unterseite des griffseitigen Unterabschnitts 39 an. Über die Zusammenwirkung von Nut 44 und Betätigungsschenkel 31 ist der Verriegelungsbügel 26 in eine Stellung verlagert, in welcher der Eingriffsbereich 28 mit seinen Rastschenkeln 33 formschlüssig in die rührwerkseitige Ringnut 24 eingreift, zur Bewegungshinderung des Rührwerks 6 nach oben in Richtung auf das Rührtopfinnere. Entsprechend ist das Rührwerk 6 zufolge der formschlüssigen Halterung und Einwirkung gegen die Oberfläche des Rührgefäßboden 5 bzw. der Widerstandsheizung 23 gespannt.

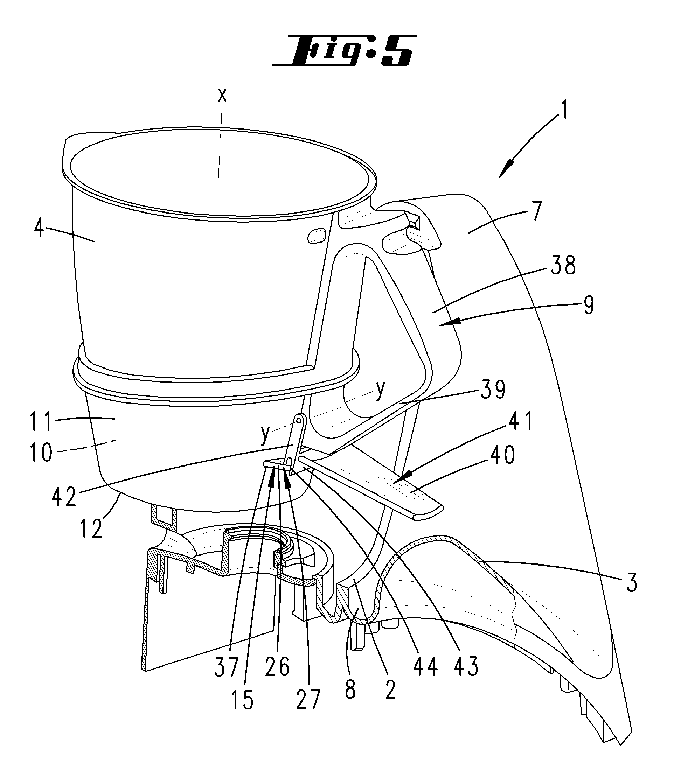

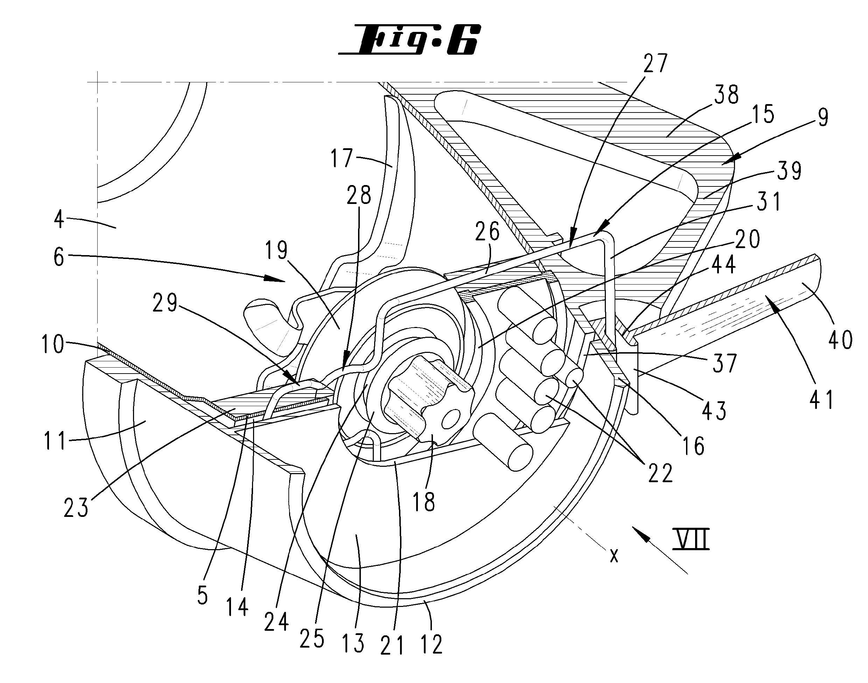

Zur Entnahme des Rührwerkes 6 ist der Verriegelungsbügel 26 in eine Öffnungsstellung gemäß den Fig. 5 und 6 bzw. gemäß der strichpunktierten Darstellung in Fig. 7 schiebezuverlagern. Dies wird erreicht durch Abschwenken des Hebels 41 um die Schwenkachse y nach unten, wobei die rotatorische Bewegung des Hebels 41 über die Zusammenwirkung von Nut 44 und Betätigungsschenkel 31 in eine Schiebebewegung des Verriegelungsbügels 26 umgesetzt wird. Die gegenüberliegenden, teilweise die Ringnut 24 des Rührwerks 6 umschlingenden Rastschenkel 33 werden hierbei aufgefedert, wobei eine Vorspannung durch die Überhöhungen 34 erzeugt ist. Im Zuge dieser Schiebeverlagerung erfährt der Verriegelungsbügel 26 im Bereich seiner Längsschenkel 30 sowie weiter im Gegenlagerbereich 29 zufolge des Einliegens derselben in dem Aufnahmeraum 14 eine Führung.

In der Öffnungsstellung ist der Verriegelungsbügel 26 so weit verlagert, dass die Ringnut 24 freigegeben ist und dessen Lagergehäuseabschnitt 25 sowie der sich hieran anschließende Kupplungsfortsatz 18 frei im Bereich der lichten Öffnung des Schiebe- und Betätigungsbereiches 27 liegt. Das Rührwerk 6 ist hiernach in einfachster Weise in Axialrichtung nach oben aus dem Topfinnern heraus entnehmbar.

Der in der Öffnungsstellung zum Handgriff 9 bzw. zu dessen Unterabschnitt 39 abgespreizte Hebel 41 kollidiert in dieser Stellung bei einem Versuch des Einsetzens des Rührgefäßes 4 in die Rührgefäßaufnahme 2 mit einem Gehäuseabschnitt, insbesondere mit dem Gehäuseabschnitt des Bedienfeldes 3, so dass eine ordnungsgemäße Zuordnung nicht ermöglicht ist und darüber hinaus eine Inbetriebnahme unterbunden ist.

Erst nach einer Rückverlagerung des sich in der Öffnungsstellung selbst haltenden Verriegelungsbügel 26, d. h. weiter nach einer aktiven Rückverlagerung desselben über den Hebel 41 ist ein ordnungsgemäßes Aufsetzen des Rührgefäßes 4 in die Rührgefäßaufnahme 2 ermöglicht.

Zur Festlegung des Rührwerkes 6 ist dieses zunächst ungerichtet in die bodenseitige Öffnung 20 einzusetzen, wonach über den Hebel 41 unter Zurückschwenkung desselben eine lineare Rückverlagerung des Verriegelungsbügels 26 in die Verriegelungsstellung erzwungen wird, in welcher die Rastschenkel 33 zur Festlegung des Rührwerkes 6 in die Ringnut 24 eingreifen.

Durch das Einschieben des Eingriffsbereiches 28 in die Geometrie der Ringnut 24 wird das Rührwerk 6 axial vorgespannt und gegen Entnahme gesichert.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

### BEZUGSZEICHENLISTE

- 1: Küchenmaschine
- 2: Rührgefäßaufnahme
- 3: Bedienfeld
- 4: Rührgefäß
- 5: Rührgefäßboden
- 6: Rührwerk
- 7: Backen
- 8: Ablaufrinne
- 9: Haltegriff
- 10: Sockelbereich
- 11: Aufnahmeteil
- 12: Aufsetzrand
- 13: Aufnahmeteilboden
- 14: Aufnahmeraum
- 15: Verriegelungselement
- 16: Aufnahmeteilwandung
- 17: Messerwerk
- 18: Kupplungsfortsatz
- 19: Lagergehäuse
- 20: Öffnung
- 21: Durchgriffsöffnung
- 22: Kontaktelemente
- 23: Widerstandsheizung
- 24: Ringnut
- 25: Lagergehäuseabschnitt
- 26: Verriegelungsbügel
- 27: Schiebe- und Betätigungsbereich
- 28: Eingriffsbereich
- 29: Gegenlagerbereich
- 30: Längsschenkel
- 31: Betätigungsschenkel
- 32: Schenkelabschnitte
- 33: Rastschenkel
- 34: Überhöhung
- 35: Längsschenkel
- 36: Querschenkel
- 37: Schlitzöffnung
- 38: Griff-Oberabschnitt
- 39: Griff-Unterabschnitt
- 40: Betätigungsabschnitt
- 41: Hebel
- 42: Anlenkschenkel
- 43: U-Steg
- 44: Nut

- a: Durchmesser
- b: Durchmesser
- c: Länge
- d: Länge
- e: Länge
- f: Breite
- g: Breite

- x: Achse
- y: Schwenkachse
- z: Symmetrieachse

## Patentansprüche

1. Küchenmaschine (1) mit einem Rührgefäß (4) und einem Gehäuse mit einer Rührgefäßaufnahme (2), wobei in dem Gehäuse ein Antrieb für ein in dem Rührgefäß (4) befindliches Rührwerk (6) vorgesehen ist, wobei weiter der Boden (5) des Rührgefäßes (4) bevorzugt aufheizbar ist und das Rührwerk (6) in dem Rührgefäß (4) verriegelbar ist, wobei weiter ein Verriegelungselement (15)zur Rührwerks-Verriegelung aus einem horizontal verlagerbaren, auffederbaren Verriegelungsbügel (26) besteht, **dadurch gekennzeichnet, dass** der Verriegelungsbügel (26) in eine selbsttätig nicht aufhebbare Öffnungsposition verlagerbar ist.

2. Küchenmaschine (1) mit einem Rührgefäß (4) und einem Gehäuse mit einer Rührgefäßaufnahme (2), wobei in dem Gehäuse ein Antrieb für ein in dem Rührgefäß (4) befindliches Rührwerk (6) vorgesehen ist, wobei weiter der Boden (5) des Rührgefäßes (4) bevorzugt aufheizbar ist und das Rührwerk (6) in dem Rührgefäß (4) verriegelbar ist, wobei die Rührwerk-Verriegelung von außen mittels eines Betätigungselementes betätigbar ist, **dadurch gekennzeichnet, dass** das Betätigungselement in eine stabile Öffnungsstellung zu verlagern ist, in welcher das Betätigungselement zugleich die Inbetriebnahme der Küchenmaschine (1) hindert.

3. Küchenmaschine nach Anspruch 1 oder insbesondere danach, **dadurch gekennzeichnet, dass** das Betätigungselement in eine stabile Öffnungsstellung zu verlagern ist, in welcher das Betätigungselement zugleich die Inbetriebnahme der Küchenmaschine (1) hindert.

4. Küchenmaschine nach Anspruch 2 oder insbesondere danach, **dadurch gekennzeichnet, dass** das Verriegelungselement (15) in eine selbsttätig nicht aufhebbare Öffnungsposition verlagerbar ist.

5. Küchenmaschine nach einem oder mehreren der vorhergehenden Ansprüche oder insbesondere danach, **dadurch gekennzeichnet, dass** das Rührgefäß (4) zumindest bodenseitig in einem Aufnahmeteil (11) aufgenommen ist und dass das Aufnahmeteil (11) in Zusammenwirkung mit dem Rührgefäß (4) eine Aufnahmeöffnung (14) bildet, in welcher das Verriegelungselement (15) aufgenommen und verlagerbar ist, wobei bevorzugt, zur Aufnahme des Verriegelungselements (15) an dem Aufnahmeteil (11) ein Bodenabschnitt ausgebildet ist, der sich parallel gerichtet zu einem Bodenabschnitt des Rührgefäßes (4) erstreckt und/oder der Aufnahmeteilboden (13) eine Durchgriffsöffnung (21) für einen Kupplungsfortsatz (18) des Rührwerks (6) und ggf. für Kontaktelemente (22), die in dem Rührgefäßboden (5) verankert sind, aufweist.

6. Küchenmaschine nach einem oder mehreren der vorhergehenden Ansprüche oder insbesondere danach, **dadurch gekennzeichnet, dass** das Verriegelungsteil (15) nur im Hinblick auf eine Bewegungshinderung des Rührwerks (6) nach oben in Wirkung tritt.

7. Küchenmaschine nach einem oder mehreren der vorhergehenden Ansprüche oder insbesondere danach, **dadurch gekennzeichnet, dass** die Abstützung des Rührwerks (6) im Rührgefäß (4) auf einem größeren Durchmesser (6) gegeben ist als der Eingriff des Verriegelungsteils (15) an dem Rührwerk (6) und dass die Abstützung des Rührwerks oberhalb des Eingriffs des Verriegelungsteils (15) gegeben ist, wobei, bevorzugt, zwischen dem Verriegelungseingriff und der Wandungs-Innenfläche des Aufnahmeteils (11) verlaufende Abschnitte des Verriegelungselements (15) durch den Boden (13) des Aufnahmeteils (11) verdeckt sind und/oder das Verriegelungselement (15) außerhalb der Wandung (16) des Aufnahmeteils (11) mit einem an dem Aufnahmeteil gelagerten Hebel (41) zur Rührwerks-Verriegelung zusammenwirkt und/oder der Hebel (41) im Verriegelungszustand an die Kontur der Küchenmaschine (1) angepasst anliegt und/oder sich der Hebel (41) im Öffnungszustand gegenüber einem Topfgriff (9) in einer Spreizstellung befindet und/oder der Hebel (41) einen abgeknickten Verlauf aufweist und die Zusammenwirkung mit dem Verriegelungselement (15) im Knickbereich gegeben ist.

8. Küchenmaschine nach einem oder mehreren der vorhergehenden Ansprüche oder insbesondere danach, **dadurch gekennzeichnet, dass** ein Anlenkschenkel (42) des Hebels (41) an dem Aufnahmeteil (11) angelenkt ist, wobei, bevorzugt, zwei Anlenkschenkel (42) vorgesehen sind, die U-förmig miteinander verbunden sind.

9. Küchenmaschine nach einem oder mehreren der vorhergehenden Ansprüche oder insbesondere danach, **dadurch gekennzeichnet, dass** ein Betätigungsabschnitt (40) des Hebels (41) in dem U-Steg (43) wurzelt.

10. Küchenmaschine nach einem oder mehreren der vorhergehenden Ansprüche oder insbesondere danach, **dadurch gekennzeichnet, dass** das Verriegelungselement (15) als sich in einer Horizontalen erstreckendes Metallteil ausgebildet ist, wobei integrale Bestandteile des Verriegelungselements (15) den Verriegelungseingriff bilden.

11. Küchenmaschine nach einem oder mehreren der vorhergehenden Ansprüche oder insbesondere danach, **dadurch gekennzeichnet, dass** bei Ausgestaltung des Verriegelungselements (15) als Verriegelungsbügel (26) der Verriegelungsbügel (26) in Verriegelungsrichtung gesehen drei unterschiedliche Bereiche aufweist, nämlich einen Schiebe- und Betätigungsbereich (27), einen Eingriffsbereich (28) und einen Gegenlagerbereich (29).

12. Küchenmaschine nach einem oder mehreren der vorhergehenden Ansprüche oder insbesondere danach, **dadurch gekennzeichnet, dass** der Schiebe- und Betätigungsbereich (27) quer zur Verschieberichtung mit einer etwa zweifach größeren Abmessung (f) ausgebildet ist als der Eingriffs- und / oder Gegenlagerbereich (28, 29).

13. Küchenmaschine nach einem oder mehreren der vorhergehenden Ansprüche oder insbesondere danach, **dadurch gekennzeichnet, dass** der Verriegelungsbügel (26) im Zuge des Verlagerns in die Öffnungsstellung durch Entlanglaufen an der Kontur des Rührwerks (6) aufgespreizt wird.

14. Küchenmaschine nach einem oder mehreren der vorhergehenden Ansprüche oder insbesondere danach, **dadurch gekennzeichnet, dass** der Verriegelungsbügel (26) in dem Hebel (41) formschlussgehaltert ist.

15. Küchenmaschine nach einem oder mehreren der vorhergehenden Ansprüche oder insbesondere danach, **dadurch gekennzeichnet, dass** der Verriegelungsbügel (26) in dem Betätigungsabschnitt (40) des Hebels (41) in einer nach unten offenen Nut (44) einliegt.
